# EUROPEAN PATENT SPECIFICATION

(11) **EP 2 786 830 B1**
(45) Date of publication and mention of the grant of the patent: **28.03.2018**
(21) Application number: 12853275.1
(22) Date of filing: 28.11.2012
(51) Int. Cl.: B23K 101/06, B23K 103/04, B23K 9/18, B23K 33/00

(54) **SUBMERGED ARC WELDING METHOD FOR STEEL SHEETS**
UP-SCHWEISSVERFAHREN FÜR STAHLPLATTEN
PROCÉDÉ DE SOUDAGE À L'ARC SUBMERGÉ POUR TÔLES D'ACIER

(30) Priority: 29.11.2011 JP 2011260265
(43) Date of publication of application: 08.10.2014
(73) Proprietor: JFE Steel Corporation, Tokyo, 100-0011 (JP)
(72) Inventor: ISHIGAMI, Atsushi, Tokyo 100-0011 (JP); HAYAKAWA, Naoya, Tokyo 100-0011 (JP); YANO, Koji, Tokyo 100-0011 (JP)
(74) Representative: Stebbing, Timothy Charles
(86) International application number: PCT/JP2012/007610
(87) International publication number: WO 2013/080523

(56) References cited:
- JP-A- H 081 338
- JP-A- S5 326 241
- JP-A- H02 258 191
- JP-A- H10 277 744
- JP-A- 2006 272 377
- JP-A- 2006 272 377
- US-A- 5 004 884

## Description

The present invention relates to submerged arc welding of steel plates and to submerged arc welding suitable for seam-welding large-diameter steel pipes such as UOE steel pipes, spiral steel pipes, and the like.

### Background Art

Submerged arc welding (for example, refer to Patent Literatures 1 and 2) using two or more electrodes is popularized as seam welding of large-diameter-steel pipes such as UOE steel pipes, spiral steel pipes, and the like, and double one layer welding with high efficiency in which the inner side is welded in one pass and the external side is welded in one pass is widely used in view of improvement of productivity of large-diameter-steel pipes.

In double one layer welding, it has the need to secure a depth of penetration for sufficiently overlapping an internal weld metal with an external weld metal so as not to produce an unmelted part, and thus welding is generally performed by supplying a large current of 1000 A or more.

On the other hand, seam welding of large-diameter steel pipes has the problem of deterioration in toughness of welded zones, particularly welded heat affected zones, and thus has the need to decrease welding heat input as much as possible in order to improve toughness of welded zones. However, a decrease in welding heat input increases the possibility of producing lack of penetration, easily produces an unmelted part, and causes the problem of easily producing surface defects such as undercut and the like.

Therefore, a welding technique is researched for both securing a depth of penetration and improving toughness of welded zones in seam welding of large-diameter steel pipes.

For example, Patent Literature 3 discloses, in accordance with the preamble of claim 1, a submerged arc welding method with a high current density, in which arc energy is input in the thickness direction of a plate to secure a necessary depth of penetration and suppress melting of a base metal in the width direction of a steel plate, thereby preventing the input of excessive welding heat and attempting to decrease welding heat input and secure a depth of penetration.

However, the technique disclosed in Patent Literature 3 includes inputting arc energy in the thickness direction of a plate to suppress melting in the width direction of steel plate, thereby causing a narrow bead width and the problem of easily producing surface defects such as undercut and the like.

Patent Literature 4 discloses a submerged arc welding method for double one layer welding with multiple electrodes, in which a current supplied to each of the electrodes is properly controlled to widen a bead width and prevent surface defects such as undercut and the like.

However, the technique disclosed in Patent Literature 4 exhibits the effect of widening a bead width but requires a large current to be supplied for significantly extending a bead width, resulting in an increase in welding heat input and the problem of deterioration in toughness of a welded zone, particularly a welded heat affected zone. Also, the supply of a large current increases an amount of a wire melted and increases a reinforcement height, and thus a groove shape is required to be newly designed.

Patent Literature 5 discloses using a two-step groove in multi-pass submerged arc welding of an extra-thick steel plate of thickness 40 mm or more.

Patent Literature 6 discloses a method of submerged arc welding of steel plates comprising forming a groove having a multi-angle shape in single side submerged arc welding.

### Citation List

### Patent Literature

PTL 1: Japanese Unexamined Patent Application Publication No. 11-138266
PTL 2: Japanese Unexamined Patent Application Publication No. 10-109171
PTL 3: Japanese Unexamined Patent Application Publication No. 2006-272377
PTL 4: Japanese Unexamined Patent Application Publication No. 2010-172896
PTL 5: Japanese Unexamined Patent Application Publication No. H08-1338 A
PTL 6: US 5,004,884

### Summary of Invention

### Technical Problem

An object of the present invention is to provide a submerged arc welding method capable of an attempt to enhance toughness of a welded zone with low heat input, and an attempt to decrease a weld reinforcement height by suppressing excessive melting of a wire, and capable of achieving a deep depth of penetration and a wide bead width. Solution to Problem

As a result of examination of weld joints produced by using various electrode arrangements and wires in multiple electrode submerged arc welding, the inventors found achieving satisfactory weld penetration with low heat input, suppressing a weld reinforcement height, and producing a weld joint with a wide bead width by increasing a current density by using a thin wire for a first electrode at the head in a welding direction and by forming a groove having a two-step groove shape in a steel plate.

The present invention has been achieved on the basis of the above-described finding and has a gist below.
(1) A submerged arc welding method for a steel plate using three or more electrodes, wherein a first electrode at the head in a welding direction has a wire diameter of 2.0 to 3.2 mm and a current density of 145 A/mm² or more, and second and subsequent electrodes are arranged behind the first electrode in a line, characterized in that a groove formed in a steel plate to be welded has a two-step groove shape satisfying θ_{B} < θ_{T} where θ_{B} is a groove angle of a bottom layer, and θ_{T} is a groove angle of a surface layer.
   The groove angle θ_{B} of a bottom layer is 40 to 70°.
   The groove angle θ_{T} of a surface layer is 90 to 120°.
(2) The submerged arc welding method described above in (1), wherein the groove satisfies H_{B} ≥ H_{T} where H_{B} is a depth of a portion at the groove angle θ_{B} of a bottom layer, and H_{T} is a depth of a portion at the groove angle θ_{T} of a surface layer.
(3) The submerged arc welding method described above in any one of (1) to (2), wherein a direct current is supplied to the first electrode, and an alternating current is supplied to the second and subsequent electrodes.
(4) The submerged arc welding method described above in any one of (1) to (3), wherein the second and subsequent electrodes have a wire diameter of 3.2 mm or more. Advantageous Effects of Invention

According to the present invention, it is possible to decrease welding heat input and secure a depth of penetration. Further, a weld reinforcement height can be lowered, and a wide bead width can be achieved. Therefore, the present invention is advantageous for submerged arc welding and exhibits a significant industrial effect. Brief Description of Drawings

[Fig. 1] Fig. 1 is a perspective view schematically showing an example of a submerged arc welding method of the present invention.
[Fig. 2] Fig. 2 is a side view of an electrode and a steel plate shown in Fig. 1.
[Fig. 3] Fig. 3 is a plan view showing a position of a wire tip of each electrode on a surface of a steel plate shown in Fig. 1.
[Fig. 4] Fig. 4 is a sectional view schematically showing an example of a groove shape to which the present invention is applied.
[Fig. 5] Fig. 5 is a sectional view schematically showing an example of a weld joint.

### Description of Embodiments

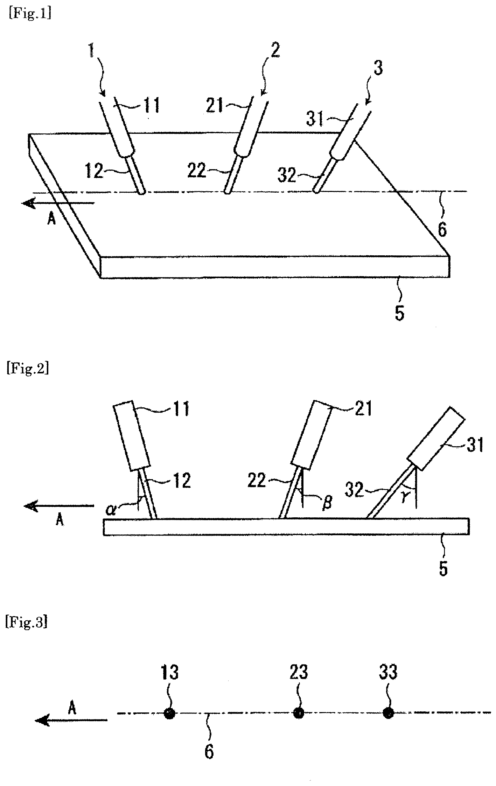

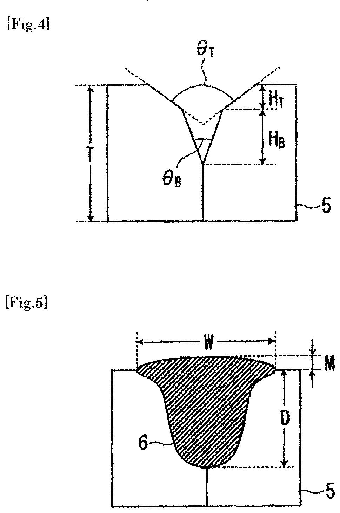

Fig. 1 is a perspective view schematically showing an example in which a steel plate is welded by applying a submerged welding method of the present invention, and Fig. 2 is a side view schematically showing the example in Fig. 1. Fig. 3 is a plan view showing a tip position of each wire on a surface of the steel plate shown in Fig. 1. Fig. 4 is a sectional view schematically showing an example of a groove shape to which the present invention is applied, and Fig. 5 is a sectional view schematically showing an example of a steel plate weld joint having the groove shown in Fig. 4.

First, a submerged arc welding method of the present invention is described with reference to Figs. 1 to 3. Figs. 1 to 3 show an example using three electrodes, but the present invention relates to a submerged arc welding method using three or more electrodes, and is not limited to use of three electrodes.

As shown in Fig. 1, when three electrodes are used, an electrode at the head in a welding direction shown by arrow A is referred to as a "first electrode 1", and a locus of a moving tip position of a wire 12 of the first electrode 1 on a surface of a steel plate 5 is referred to as a "weld line 6". An electrode second in the welding direction A is referred to as a "second electrode 2" and located behind the first electrode 1, and further a third electrode 3 is disposed behind the second electrode 2 on a line. Torches 11, 21, and 31 of the electrodes are provided with wires 12, 22, and 32, respectively.

First, the first electrode is described.

A current density can be increased by thinning the wire 12 of the first electrode 1, and a deep penetration can be achieved even with low welding heat input. Therefore the wire 12 has a wire diameter of 3.2 mm or less. However, with the wire diameter of less than 2.0 mm, the wire 12 is excessively thin, and thus a wire feeding rate is forced to be increased for securing a necessary amount of a weld metal, resulting in unstable wire feed speed and unstable welding. Therefore, the wire 12 of the first electrode 1 has a wire diameter in a range of 2.0 to 3.2 mm.

As described above, the current density of a current supplied to the wire 12 of the first electrode 1 can be increased by using the wire 12 having a small wire diameter, but a sufficient depth of penetration cannot be obtained with a current density of less than 145 A/mm². Therefore, the current density of the wire 12 of the first electrode 1 is 145 A/mm² or more. Also, with the excessively high current density of the wire 12 of the first electrode 1, a wire feeding rate is forced to be increased, resulting in unstable welding. Therefore, the current density is preferably 310 A/mm² or less.

The current supplied to the wire 12 of the first electrode 1 is preferably a direct current in order to further increase the depth of penetration.

Further, as shown in Fig. 2, the wire 12 of the first electrode 1 is preferably inclined so that the tip of the wire 12 is located behind (that is, the second electrode side) the torch 11 in the welding direction A. An angle α (referred to as a "sweep-back angle" hereinafter) formed by the wire 12 and a vertical line is preferably 15° or less because the effect of increasing the depth of penetration is significantly exhibited. In addition, the wire 12 of the first electrode 1 may be disposed vertically (sweep-back angle α = 0°).

Next, the second electrode is described.

As shown in Fig. 3, the second electrode 2 is disposed so that the tip position 23 of the wire 22 on a surface of a steel plate is arranged on the welding line 6. When the wire 22 has an excessively small wire diameter, a weld reinforcement height tends to be increased, and thus the wire diameter of the wire 22 is preferably 3.2 mm or more. On the other hand, when the wire 22 has an excessively large wire diameter, slag inclusion easily occurs, and thus the wire diameter of the wire 22 is preferably 4.0 mm or less.

Also, a current to be supplied to the wire 22 is preferably an alternating current in order to prevent the occurrence of arc interference with the other electrodes.

Further, as shown in Fig. 2, the wire 22 of the second electrode 2 is preferably inclined so that the tip of the wire 22 is located ahead of (that is, the first electrode side) the torch 21 in the welding direction A. An angle P (referred to as an "angle of advance" hereinafter) formed by the wire 22 and a vertical line is preferably 5° or more because the effect of widening a bead width is significantly exhibited. With the excessively large angle of advance, the torch is forced to be significantly lengthened, and thus the angle of advance of the second electrode 2 is 25° or less in view of limitation of equipment.

Next, the third electrode is described.

As shown in Fig. 3, the third electrode 3 is disposed so that the tip position 33 of the wire 32 on a surface of a steel plate is arranged on the welding line 6. When the wire 32 has an excessively small wire diameter, a weld reinforcement height tends to be increased, and thus the wire diameter of the wire 32 is preferably 3.2 mm or more. On the other hand, when the wire 32 has an excessively large wire diameter, an amount of deposit metal of the wire is decreased, and thus the wire diameter of the wire 32 is preferably 4.0 mm or less.

Also, a current to be supplied to the wire 32 is preferably an alternating current in order to prevent the occurrence of arc interference with the other electrodes.

As shown in Fig. 2, the wire 32 of the third electrode 3 is preferably inclined so that the tip of the wire 32 is located ahead of (that is, on the first electrode side) the torch 31 in the welding direction A. An angle γ of advance is preferably 20° or more because the effect of widening a bead width is significantly exhibited. With the excessively large angle of advance, the torch is forced to be significantly lengthened, and thus in welding with four or more electrodes, the angle of advance of the third electrode 3 is 30° or less in view of limitation of equipment.

Although an example using the three electrodes is described above, the number of electrodes used in the present invention is not limited to 3, and the present invention can be applied to submerged arc welding using three or more electrodes. In particular, when 3 to 5 electrodes are used, a significant effect can be obtained. Use of 6 or more electrodes is undesired because of deterioration in toughness of a welded heat affected zone due to excessive welding heat input.

When fourth and subsequent electrodes are arranged behind the third electrode 3, the electrodes are disposed in a line so that the tip positions of wires on a surface of a steel plate are arranged on the welding line 6. The wire diameters and angles of advance of the wires used are the same as those in the third electrode, and an alternating current is preferably supplied. Next, a groove shape to which the present invention is applied, and the shape of a weld joint produced by the groove shape are described with reference to Figs. 4 and 5.

As shown in Fig. 4, a groove shape to which the present invention is applied is a two-step groove shape including combination of two types of groove angles, and a groove angle on the bottom side (referred to as a "groove angle of a bottom layer" hereinafter) of a steel plate 5 is θ_{B}, and a groove angle on the surface side (referred to as a "groove angle of a surface layer" hereinafter) of the steel plate 5 is θ_{T}.

With the groove angle θ_{B} of a bottom layer of less than 40°, slag inclusion easily occurs during welding, and the weld enforcement height is increased, while with the groove angle θ_{B} of a bottom layer over 70°, a groove sectional area is increased, and a required amount of deposit metal of the wire is increased, thereby causing the need to set the welding heat input high. Therefore, the groove angle θ_{B} of a bottom layer is in a range of 40° to 70°.

With the groove angle θ_{T} of a surface layer of less than 90°, the effect of widening a bead width is small, while with the groove angle θ_{T} of a surface layer over 120°, a groove width is excessively increased, and thus undercut easily occurs. Therefore, the groove angle θ_{T} of a surface layer is in a range of 90° to 120°.

In order to achieve a deep depth of penetration and a wide bead width and decrease a weld reinforcement height by applying the submerged arc welding method of the present invention to the two step groove including the combination of the groove angle θ_{B} of a bottom layer and the groove angle θ_{T} of a surface layer, it is necessary to satisfy that θ_{B} < θ_{T}.

Also, as shown in Fig. 4, when H_{B} < H_{T} is satisfied, where H_{B} is a depth of a portion at the groove angle θ_{B} of a bottom layer (hereinafter referred to as a "groove depth of a bottom layer"), and H_{T} is a depth of a portion at the groove angle θ_{T} of a surface layer (hereinafter referred to as a "groove depth of a surface layer"), a groove sectional area is increased, and a required amount of deposit metal of the wire is increased, thereby causing the need to set the welding heat input high. Therefore, the groove depth H_{B} of a bottom layer and the groove depth H_{T} of a surface layer preferably satisfy H_{B} ≥ H_{T}.

As described above, according to the present invention, it is possible to decrease the welding heat input and secure depth of penetration D, decrease weld reinforcement height M, and achieve wide bead width W as shown in Fig. 5.

Also, the present invention can be applied to one-side welding and both-side welding. Particularly in application to welding of a plate having a thickness exceeding 30 mm, it is possible to achieve a deep depth of penetration and a wide bead width and decrease welding heat input, and thus the present invention is effective in improving toughness of a welded heat affected zone and preventing undercut.

Further, a solid wire is generally used as a welding wire for submerged arc welding, but not only the solid wire but also a metal cored wire can be applied to the present invention.

### EXAMPLES

After a two-step groove was formed in the steel plate 5 having a thickness T of 31.8 mm as shown in Fig. 4, a weld joint shown in Fig. 5 was formed in one pass of submerged arc welding using 3 to 5 electrodes. Table 1 shows groove shapes, Table 2 shows welding conditions, Table 3 shows arrangements of electrodes, and Table 4 shows setting of welding currents.

**[Table 1]**

| Number | Thickness (mm) | Bottom layer | | Surface layer | | Groove width (mm) | Groove cross-sectional area (mm) |
|---|---|---|---|---|---|---|---|
| | | Groove angle θ_{B} (°) | Groove depth H_{B} (mm) | Groove angle θ_{T} (°) | Groove depth H_{T} (mm) | | |
| 1 | 31.8 | 50 | 8.0 | 100 | 5.0 | 19.4 | 96.9 |
| 2 | 31.8 | 40 | 6.5 | 100 | 6.5 | 20.2 | 96.5 |
| 3 | 31.8 | 70 | 10.0 | 100 | 3.0 | 21.2 | 122.8 |
| 4 | 31.8 | 50 | 8.0 | 100 | 5.0 | 19.4 | 96.9 |
| 5 | 31.8 | 50 | 8.0 | 100 | 5.0 | 19.4 | 96.9 |
| 6 | 31.8 | 70 | 13.0 | - | - | 18.2 | 118.3 |
| 7 | 31.8 | 36 | 6.5 | 100 | 6.5 | 19.7 | 91.5 |
| 8 | 31.8 | 80 | 8.0 | 100 | 5.0 | 25.3 | 150.6 |
| 9 | 31.8 | 70 | 10.0 | 130 | 3.0 | 26.9 | 131.3 |
| 10 | 31.8 | 50 | 5.0 | 100 | 8.0 | 23.7 | 125.2 |
| 11 | 31.8 | 50 | 8.0 | 100 | 5.0 | 19.4 | 96.9 |
| 12 | 31.8 | 50 | 8.0 | 100 | 5.0 | 19.4 | 96.9 |
| 13 | 31.8 | 50 | 8.0 | 100 | 5.0 | 19.4 | 96.9 |
| 14 | 31.8 | 50 | 8.0 | 100 | 5.0 | 19.4 | 96.9 |

**[Table 2]**

| Number | #1* | | | #2* | | | #3* | | | #4* | | | #5* | | | Welding speed (cm/min) | Welding heat input (kJ/mm) |
|---|---|---|---|---|---|---|---|---|---|---|---|---|---|---|---|---|---|
| | Current (A) | Voltage (V) | Wire diameter (mm) | Current (A) | Voltage (V) | Wire diameter (mm) | Current (A) | Voltage (V) | Wire diameter (mm) | Current (A) | Voltage (V) | Wire diameter (mm) | Current (A) | Voltage (V) | Wire diameter (mm) | | |
| 1 | 1200 | 34 | 2.4 | 1080 | 38 | 4.0 | 840 | 42 | 4.0 | 720 | 42 | 4.0 | - | - | - | 140 | 6.3 |
| 2 | 950 | 32 | 2.0 | 850 | 38 | 4.0 | 660 | 42 | 4.0 | 570 | 42 | 4.0 | - | - | - | 109 | 6.3 |
| 3 | 1280 | 35 | 3.2 | 860 | 36 | 3.2 | 850 | 44 | 4.0 | 750 | 44 | 4.0 | - | - | - | 110 | 8.0 |
| 4 | 800 | 32 | 1.6 | 720 | 40 | 3.2 | 560 | 45 | 3.2 | 480 | 45 | 3.2 | - | - | - | 97 | 6.3 |
| 5 | 1400 | 35 | 4.0 | 1100 | 36 | 4.0 | 950 | 42 | 4.0 | 800 | 42 | 4.0 | - | - | - | 155 | 6.3 |
| 6 | 1200 | 34 | 2.4 | 1080 | 38 | 4.0 | 840 | 42 | 4.0 | 720 | 42 | 4.0 | - | - | - | 140 | 6.3 |
| 7 | 1200 | 34 | 2.4 | 1080 | 38 | 4.0 | 760 | 48 | 4.0 | 650 | 48 | 4.0 | - | - | - | 150 | 6.0 |
| 8 | 1400 | 32 | 3.2 | 980 | 42 | 4.0 | 820 | 44 | 4.0 | 700 | 44 | 4.0 | - | - | - | 145 | 6.3 |
| 9 | 1250 | 35 | 2.4 | 1000 | 42 | 3.2 | 850 | 42 | 3.2 | 700 | 42 | 3.2 | - | - | - | 143 | 6.3 |
| 10 | 1300 | 33 | 2.4 | 1120 | 36 | 4.0 | 900 | 42 | 4.0 | 790 | 44 | 4.0 | - | - | - | 150 | 6.3 |
| 11 | 1200 | 34 | 2.4 | 1000 | 40 | 3.2 | 840 | 42 | 4.0 | 730 | 42 | 4.0 | - | - | - | 140 | 6.3 |
| 12 | 1200 | 35 | 2.4 | 850 | 45 | 2.4 | 750 | 45 | 3.2 | 700 | 40 | 3.2 | - | - | - | 135 | 6.3 |
| 13 | 1250 | 34 | 2.4 | 900 | 36 | 4.0 | 850 | 42 | 4.0 | - | - | - | - | - | - | 105 | 6.3 |
| 14 | 1250 | 34 | 2.4 | 900 | 36 | 4.0 | 850 | 42 | 4.0 | 750 | 42 | 4.0 | 680 | 44 | 4.0 | 165 | 6.3 |

| | | | | | | | | | | | | | | | | | |
|---|---|---|---|---|---|---|---|---|---|---|---|---|---|---|---|---|---|
| * #1 to #5 represent first electrode to fifth electrode, respectively. | | | | | | | | | | | | | | | | | |

**[Table 3]**

| Number | Distance between electrodes (mm) * | | | | Distance between base metal and tip (mm) | | | | | Electrode angle (°) ** | | | | |
|---|---|---|---|---|---|---|---|---|---|---|---|---|---|---|
| | #1 to #2 | #" to #3 | #3 to #4 | #4 to #5 | #1 | #2 | #3 | #4 | #5 | #1 | #2 | #3 | #4 | #5 |
| 1 | 16 | 12 | 12 | - | 30 | 30 | 30 | 30 | - | 0 | 13 | 25 | 40 | - |
| 2 | 22 | 14 | 12 | - | 30 | 30 | 35 | 35 | - | -5 | 12 | 24 | 36 | - |
| 3 | 18 | 13 | 13 | - | 25 | 25 | 30 | 30 | - | 0 | 15 | 30 | 45 | - |
| 4 | 30 | 16 | 16 | - | 30 | 30 | 32 | 32 | - | 0 | 13 | 25 | 36 | - |
| 5 | 17 | 13 | 15 | - | 25 | 30 | 32 | 32 | - | 0 | 12 | 24 | 36 | - |
| 6 | 16 | 12 | 12 | - | 30 | 30 | 30 | 30 | - | 0 | 13 | 25 | 40 | - |
| 7 | 20 | 14 | 14 | - | 30 | 30 | 35 | 35 | - | 0 | 12 | 24 | 36 | - |
| 8 | 15 | 10 | 10 | - | 30 | 32 | 35 | 35 | - | 0 | 12 | 24 | 36 | - |
| 9 | 25 | 15 | 15 | - | 30 | 30 | 35 | 35 | - | -5 | 5 | 30 | 45 | - |
| 10 | 20 | 14 | 14 | - | 28 | 30 | 32 | 32 | - | 0 | 12 | 24 | 36 | - |
| 11 | 27 | 18 | 10 | - | 30 | 30 | 35 | 35 | - | 0 | 12 | 24 | 36 | - |
| 12 | 30 | 20 | 10 | - | 30 | 35 | 36 | 36 | - | -5 | 5 | 24 | 44 | - |
| 13 | 20 | 15 | - | - | 30 | 32 | 32 | - | - | 0 | 12 | 24 | - | - |
| 14 | 16 | 12 | 10 | 10 | 30 | 30 | 35 | 35 | 35 | -8 | 0 | 8 | 25 | 45 |

| | | | | | | | | | | | | | | |
|---|---|---|---|---|---|---|---|---|---|---|---|---|---|---|
| * #1 to #5 represent first electrode to fifth electrode, respectively. ** A positive electrode angle represents an angle of advance, and a negative electrode angle represents a sweep-back angle. | | | | | | | | | | | | | | |

**[Table 4]**

| Number | Current density of first electrode (A/mm²) | Type of power supply * | | | | |
|---|---|---|---|---|---|---|
| | | #1 | #2 | #3 | #4 | #5 |
| 1 | 265 | DC | AC | AC | AC | - |
| 2 | 302 | DC | AC | AC | AC | - |
| 3 | 159 | DC | AC | AC | AC | - |
| 4 | 398 | DC | AC | AC | AC | - |
| 5 | 111 | DC | AC | AC | AC | - |
| 6 | 265 | DC | AC | AC | AC | - |
| 7 | 265 | DC | AC | AC | AC | - |
| 8 | 174 | DC | AC | AC | AC | - |
| 9 | 276 | DC | AC | AC | AC | - |
| 10 | 287 | DC | AC | AC | AC | - |
| 11 | 265 | AC | AC | AC | AC | - |
| 12 | 265 | DC | AC | AC | AC | - |
| 13 | 276 | DC | AC | AC | - | - |
| 14 | 276 | DC | AC | AC | AC | AC |

| | | | | | | |
|---|---|---|---|---|---|---|
| * #1 to #5 represent first electrode to fifth electrode, respectively. | | | | | | |

The bead appearances of the resultant weld joints were visually observed, and further cross-sections of bead constant regions were observed to measure depth of penetration D (mm), bead width W (mm), and weld reinforcement height M (mm). The results are shown in Table 5.

**[Table 5]**

| Number | Depth of penetration (mm) | Bead width (mm) | Weld reinforcement height (mm) | Defect | Bead appearance | Remarks |
|---|---|---|---|---|---|---|
| 1 | 19.2 | 25.3 | 1.6 | No | Beautiful | Invention Example |
| 2 | 19.8 | 24.9 | 2.5 | No | Beautiful | Invention Example |
| 3 | 22.2 | 30.6 | 1.0 | No | Beautiful | Invention Example |
| 4 | 16.9 | 25.2 | 3.2 | No | Beautiful | Comparative Example |
| 5 | 16.4 | 28.3 | 1.1 | No | Beautiful | Comparative Example |
| 6 | 20.8 | 22.5 | 2.6 | No | Beautiful | Comparative Example |
| 7 | 18.4 | 24.3 | 3.5 | Slag inclusion | Beautiful | Invention Example |
| 8 | 21.5 | 25.0 | 2.1 | No | Undercut | Invention Example |
| 9 | 20.7 | 26.4 | 2.5 | No | Undercut | Invention Example |
| 10 | 18.8 | 24.6 | 1.8 | No | Undercut | Invention Example |
| 11 | 18.6 | 26.1 | 1.9 | No | Beautiful | Invention Example |
| 12 | 19.4 | 24.6 | 2.7 | No | Beautiful | Invention Example |
| 13 | 21.5 | 26.1 | 1.2 | No | Beautiful | Invention Example |
| 14 | 18.4 | 24.4 | 1.4 | No | Beautiful | Invention Example |

Table 5 indicates that in an invention example according to the present invention, a deep depth of penetration (18.4 to 22.2 mm) and a wide bead width (24.4 to 30.6 mm) can be achieved with low heat input.

In particular, in Numbers 1 to 3, 13, and 14, the bead appearance is good without defects, and the weld reinforcement height is low (1.0 to 2.5 mm).

On the other hand, in Number 4 of a comparative example, the depth of penetration and the bead width are satisfactory, but a large current cannot be supplied because of the first electrode having a wire diameter of 1.6 mm, thereby failing to achieve a deep depth of penetration. In Number 5, a high current density cannot be supplied because of the first electrode having a wire diameter of 4.0 mm, thereby failing to achieve a deep depth of penetration. In Number 6, a V-groove, not a two-step groove, is used, and thus a wide bead width cannot be achieved.

### Reference Signs List

- 1: first electrode
- 11: torch of first electrode
- 12: wire of first electrode
- 13: tip position of wire of first electrode
- 2: second electrode
- 21: torch of second electrode
- 22: wire of second electrode
- 23: tip position of wire of second electrode
- 3: third electrode
- 31: torch of third electrode
- 32: wire of third electrode
- 33: tip position of wire of third electrode
- 5: steel plate
- 6: welding line

## Claims

1. A submerged arc welding method for a steel plate (5) using three or more electrodes (1, 2, 3), wherein a first electrode (1) at the head in a welding direction has a wire diameter of 2.0 to 3.2 mm and a current density of 145 A/mm² or more, and second and subsequent electrodes (2, 3) are arranged behind the first electrode (1) in a line, **characterized in that** a groove formed in a steel plate (5) to be welded has a two-step groove shape satisfying θ_{B} < θ_{T} where θ_{B} is a groove angle of a bottom layer, and θ_{T} is a groove angle of a surface layer, and wherein the groove angle θ_{B} of the bottom layer is 40 to 70° and the groove angle θ_{T} of the surface layer is 90 to 120°.

2. The submerged arc welding method according to Claim 1, wherein the groove satisfies H_{B} ≥ H_{T}, where H_{B} is a depth of a portion at the groove angle θ_{B} of a bottom layer, and H_{T} is a depth of a portion at the groove angle θ_{T} of a surface layer.

3. The submerged arc welding method according to any one of Claims 1 to 2, wherein a direct current is supplied to the first electrode (1), and an alternating current is supplied to the second and subsequent electrodes (2, 3).

4. The submerged arc welding method according to any one of Claims 1 to 3, wherein the second and subsequent electrodes (2, 3) have a wire diameter of 3.2 mm or more.

## Patentansprüche

1. Unterpulverschweißverfahren für eine Stahlplatte (5) unter Verwendung von drei oder mehr Elektroden (1, 2, 3), wobei eine erste Elektrode (1) am Kopf in einer Schweißrichtung einen Drahtdurchmesser von 2,0 bis 3,2 mm und eine Stromdichte von 145 A/mm² oder mehr aufweist und zweite und nachfolgende Elektroden (2, 3) hinter der ersten Elektrode (1) in einer Linie angeordnet sind,
**dadurch gekennzeichnet, dass** eine in einer Stahlplatte (5) ausgebildete zu verschweißende Nut eine zweistufige Nutenform, die θ_{B} < θ_{T} erfüllt, aufweist, wobei θ_{B} ein Nutwinkel einer Bodenschicht und θ_{T} ein Nutwinkel einer Oberflächenschicht ist und wobei der Nutwinkel θ_{B} der Bodenschicht 40 bis 70° beträgt und die Nutwinkel θ_{T} der Oberflächenschicht 90 bis 120° beträgt.

2. Unterpulverschweißverfahren nach Anspruch 1, wobei die Nut H_{B} ≥ H_{T} erfüllt, wobei H_{B} eine Tiefe eines Abschnitts beim Nutwinkel θ_{B} einer Bodenschicht ist und H_{T} eine Tiefe eines Abschnitts beim Nutwinkel θ_{T} einer Oberflächenschicht ist.

3. Unterpulverschweißverfahren nach einem der Ansprüche 1 bis 2, wobei ein Gleichstrom der ersten Elektrode (1) zugeführt wird und ein Wechselstrom der zweiten und den nachfolgenden Elektroden (2, 3) zugeführt wird.

4. Unterpulverschweißverfahren nach einem der Ansprüche 1 bis 3, wobei die zweite und die nachfolgenden Elektroden (2, 3) einen Drahtdurchmesser von 3,2 mm oder mehr aufweisen.

## Revendications

1. Procédé de soudage à l'arc submergé pour une plaque d'acier (5) utilisant trois ou plus de trois électrodes (1, 2, 3), dans lequel une première électrode (1) en tête dans une direction de soudage a un diamètre de fil de 2,0 à 3,2 mm et une densité de courant de 145 A/mm² ou plus, et la seconde et les électrodes suivantes (2, 3) sont disposées derrière la première électrode (1) en ligne, **caractérisé en ce qu'**une rainure formée dans une plaque d'acier (5) à souder a une forme de rainure à deux étages satisfaisant à θ_{B} < θ_{T} où θ_{B} est un angle de rainure d'une couche inférieure, et θ_{T} est un angle de rainure d'une couche de surface, et dans lequel l'angle de rainure θ_{B} de la couche inférieure est de 40 à 70 ° et l'angle de rainure θ_{T} de la couche de surface est de 90 à 120 °.

2. Procédé de soudage à l'arc submergé selon la revendication 1, dans lequel la rainure satisfait à H_{B} ≥ H_{T}, où H_{B} est une profondeur d'une portion à l'angle de rainure θ_{B} d'une couche inférieure, et H_{T} est une profondeur d'un partie à l'angle de rainure θ_{T} d'une couche de surface.

3. Procédé de soudage à l'arc submergé selon l'une quelconque des revendications 1 à 2, dans lequel un courant continu est délivré dans la première électrode (1), et un courant alternatif est délivré dans la seconde et les électrodes suivantes (2, 3).

4. Procédé de soudage à l'arc submergé selon l'une quelconque des revendications 1 à 3, dans lequel la seconde et les électrodes suivantes (2, 3) ont un diamètre de fil de 3,2 mm ou plus.
